# EUROPEAN PATENT SPECIFICATION

(11) **EP 1 529 442 B1**
(45) Date of publication and mention of the grant of the patent: **14.10.2009**
(21) Application number: 04026153.9
(22) Date of filing: 04.11.2004
(51) Int. Cl.: A21C 11/00

(54) **Method for producing breadsticks having a surface concavity**
Verfahren zur Herstellung von Brotstöcke mit einer Oberflächenvertiefung.
Procédé de fabrication des bâtons de pain ayant une surface concave

(30) Priority: 07.11.2003 IT MI20032147
(43) Date of publication of application: 11.05.2005
(73) Proprietor: BARILLA G. E R. FRATELLI S.p.A., 43100 Parma (IT)
(72) Inventor: Buriani, Ernesto, 42100 Reggio Emilia (IT); Cavatorta, Andrea, 43044 Collecchio (Parma) (IT); Coscia, Luigi, 43100 Parma (IT); Giovanetti, Marco, 42100 Parma (IT)
(74) Representative: Ferreccio, Rinaldo

(56) References cited:
- EP-A- 0 538 497
- DE-A1- 3 306 272
- GB-A- 262 687
- GB-A- 2 203 380
- GB-A- 2 274 573
- US-A- 1 600 191
- US-A- 1 738 301
- US-A- 1 817 690
- US-A- 1 910 620
- US-A- 2 604 841
- US-A- 3 326 119
- US-A- 3 840 678
- US-A- 4 190 229
- US-A- 4 214 517
- US-A- 4 348 949
- US-A- 5 897 900

## Description

### Field of application

The present invention refers to the technical field of the bakery product industry.

In particular, the invention concerns a method for producing breadsticks having a substantially U-shaped cross-section, as a consequence of the presence of a longitudinally extending surface concavity.

### Prior art

Breadsticks are a traditional Italian bakery product, widely used as a bread substitute, in particular as a starter accompaniment. Breadsticks are both handmade and industrially produced and are sold in packets weighing 100-400 g, suitable for family consumption, and in packets weighing a few tens of grams (typically containing 4 or 5 breadsticks) mostly used in restaurants.

The elongated shape of breadsticks, as well as their crispness, makes them particularly suitable for eating in association with sliced cured meats, such as Parma or cooked ham. A starter that is particularly appealing to the eye, as well as certainly being tasty and flavoursome, is traditionally prepared by wrapping slices of ham or other cured meats around the breadsticks.

It is worth pointing out that the aforementioned advantageous characteristics are matched with a particularly balanced ingredients' composition from the dietetic-nutritional point of view, thanks to the generally low content of fatty substances.

The substantially cylindrical shape of breadsticks, however, is not particularly suitable for use in association with creamy cheeses or dips, due to the intrinsic difficulty in spreading creams or collecting dips on the convex and smooth surface of breadsticks.

In these cases, other types of bakery products are preferred, such as crackers or other types of crispy bread substitutes, and in the particular case of dips, flat or, rather, concave-shaped snacks such as tacos, are preferably used.

These products do, however, have the drawback of having a generally rather high fat content and certainly a higher fat content than breadsticks.

Therefore, it would be desirable to have a bakery product with the advantageous nutritional characteristics of breadsticks, and which is also suitable for eating in association with creams, creamy cheeses and dips.

EP-A-0 538 497 discloses a breadstick which has a typical rod-like shape and is formed with a lengthwise surface cleft; the surface cleft is obtained by means of a flash baking and gives the breadstick the appearance of a so-called French loaf.

US 4 214 517 describes a bread cooking device comprising a base, having a longitudinal depression for receiving breadstuff, a die positionable in the depression, extending parallel to the depression; with such a device bread items are produced by introducing a dough in the depression, lowering the die into the depression, allowing the dough to rise about the die and finally baking the dough with the die inserted thereinside.

### Summary of the invention

The problem at the basis of the present invention was therefore that of providing a process for preparing a bakery product with the aforementioned characteristics.

Such a problem has been solved, according to the invention, by a process for producing breadsticks having a wide substantially U-shaped cross-section that comprises the steps of:
preparing a breadstick dough,
forming a plurality of elongated and substantially cylinder-shaped semi-finished products from said dough,
arranging such semi-finished products in channel-shaped recesses having an arched section and being of a predetermined depth, formed in a baking tin; characterized by the steps of:
   leaving the aforementioned semi-finished products to rest and rise;
   compressing the exposed surface of the semi-finished products by means of pressers having an elongated convex compression surface matching that of the aforementioned recesses, heated to a temperature higher than 130° C, for a predetermined amount of time, in order to form a recess extending longitudinally along the aforementioned exposed surface of the breadsticks; and
   baking the aforementioned semi-finished products, thus obtaining breadsticks with a wide substantially U-shaped cross-section.

Preferably, the aforementioned pressers used for the compression step have substantially the same or slightly shorter length than the length of the semi-finished products.

The pressers are preferably heated to a temperature of 130-200°C, advantageously 140-160°C, and the compression generally lasts 30-180 seconds and preferably 60-120 seconds.

When the length of the pressers is slightly shorter than that of the semi-finished products, it is shorter by no more than 10% of their length (e.g. it is not shorter than 180 mm for a semi-finished product of 200 mm).

The compression load is calculated so that the distance between the baking tin and the presser is of 2-4 mm.

The elongated and substantially cylinder-shaped semi-finished products are preferably formed from the breadstick dough by extrusion, using a die with round openings. Typically, the diameter of such openings is 5-10 mm, advantageously 7-8 mm.

The compression exerted by means of the heated presser on the exposed surface of the semi-finished products arranged in the channel-shaped recesses of the baking tin enables a longitudinal concavity to be formed on the semi-finished products, which is stabilised against the springing back of the dough by the hardening of the surface as a consequence of hot pressing. During the hot pressing, in fact, there is substantial evaporation of the water bound to the gluten of the surface layers causing accentuated cleavage of the gluten chains.

The longitudinal concavity of the hot pressed semi-finished products also remains substantially unaltered throughout the subsequent baking step, which is carried out in the conditions conventionally used in the production of breadsticks, i.e. at a temperature of 180-250°C for 10-20 nuns.

The present invention shall be further described with reference to some drawings and to an example provided for illustrative and non-limiting purposes.

### Brief description of the drawings

Figure 1 shows a perspective view of a breadstick according to the present invention.
Figure 2 is a schematic representation in section of the apparatus used in the present process in an initial step thereof.
Figure 3 is a schematic representation in section of the aforementioned apparatus in an intermediate step of the process according to the invention.
Figure 4 is a schematic representation in section of the aforementioned apparatus in a further step of the process according to the invention.
Figure 5 is a section view of a baking tin used in the process according to the invention.

### Detailed description of a preferred embodiment

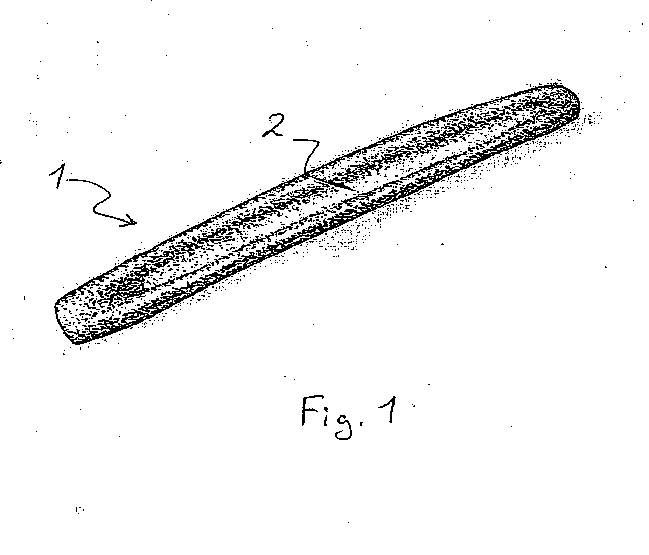

With reference to figure 1, a breadstick 1 obtained through the process according to the invention has a concavity 2 extending substantially along its entire length.

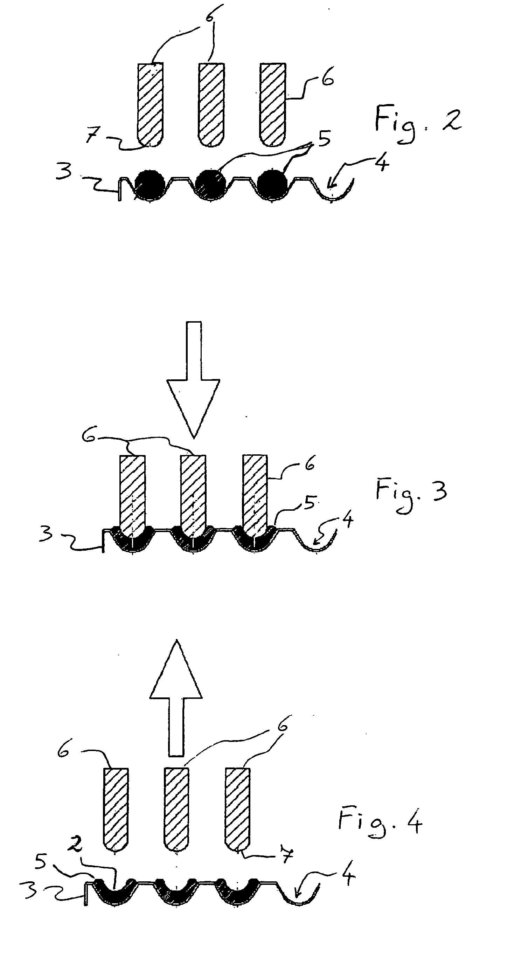

In fig. 2 a baking tin 3 is depicted, in cross-section, having channel-shaped recesses, of a substantially semi-circular section. Elongated and substantially cylinder-shaped semi-finished products 5 of breadstick dough are accomodated inside such recesses 4, each having a respective presser 6 associated to it overhead, having an arched and convex compression surface 7, substantially matching the surface of the recesses 4.

The pressers 6 are heated, for example by means of electrical resistances (not shown), to a temperature of over 130°C.

Fig. 3 represents the compression step of the semi-finished products 5 contained in the recesses 4 carried out by the pressers 6.

Fig. 4 shows the step in which the pressers 6 are moved away from the recesses 4, at the end of the hot compression step of the semi-finished products 5.

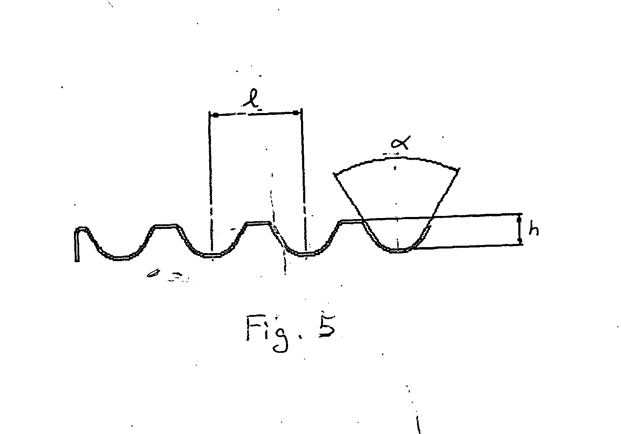

In fig. 5, the distance 1 between the points of maximum depth of two adjacent recesses 4, the angle a defined by the extensions of the walls of the recesses 4 and the depth h of the recesses 4, are indicated.

With reference to the aforementioned drawings, the invention shall now be illustrated in greater detail through a non-limiting example embodiment of the process according to the invention.

### EXAMPLE

Breadstick dough is prepared using the following ingredients, indicated in parts by weight:

| | |
|---|---|
| Soft wheat flour | 100 parts |
| Fat or vegetable oil | 12 parts |
| Water | 36 parts |
| Baker's yeast | 5 parts |
| Malt extract | 3 parts |
| Salt | 2 parts |

The ingredients listed above are kneaded in a planetary mixer until a homogeneous dough is obtained, which is then laminated and extruded through a die with round holes having a diameter of 7.5 mm. The rope of extruded dough is cut so as to form elongated and substantially cylinder-shaped semi-finished products 5 of a length of about 210 mm and a weight of about 16 g. Such semi-finished products are laid down (fig. 2) in the channel-shaped recesses 4 formed in baking tins 3. The channel-shaped recesses 4 have an arched section, have a depth h of about 9 mm ad extend parallel to each other along the entire surface of the baking tin 3, with a distance 1 between the points of maximum depth of two adjacent recesses 4 of 25 mm. The angle a formed by the extensions of the walls of the recesses 4 measures about 60°.

After fermentation in the baking tin for 1 hour at 38°C, the semi-finished products 5 are sent on to a pressing and simultaneous hot modelling step, carried out by lowering respective hot pressers 6 onto their exposed surface. Such pressers 6 are substantially in the shape of parallelepiped rods, 195 mm long, 11 mm wide and 50 mm tall, the face 7 facing towards the baking tins exhibiting a convexity such as to substantially match the concave surface of the arched recesses 4.

The lowering of the pressers 6 on the exposed surface of the semi-finished products 5 (fig. 3) determines the creation of a concavity 2 extending substantially along the entire length of the semi-finished products. The mass of dough shifted by the pressers 6 runs up along the walls of the channel-shaped recesses 4 which results in the formation of semi-finished products 5 with a wide substantially U-shaped cross-section.

The pressing of the semi-finished products 5 lasts for 90 seconds, during which time, due to the contact of the dough with the surface of the pressers 6 heated to 150°C, gelatinisation of the starch and cleavage of the gluten chains occurs on the exposed layers of the semi-finished products, causing substantial hardening of such layers.

Accordingly, even after the pressers 6 have been moved away (fig. 4), the wide U-shape of the section of the semi-finished products 5 is maintained despite the natural tendency of the dough to spring back. Such a shape is also maintained during and after the baking step, carried out in a conventional manner at 200°C for 10 minutes.

After baking, breadsticks 1 are obtained having a concavity 2 extending substantially along their entire length, endowed with excellent characteristics of crispiness and brittleness and particularly suitable for being eaten in association with creams, creamy cheeses or dips (e.g. spicy dips typical of Mexican, Indian and Chinese restaurants), thanks to their particular shape that allows such creams or dips to be spread or scooped up.

Compared to the snacks conventionally used in association with dips or creams, such as tacos, the breadsticks obtained with the method according to the present invention have the advantage of having a more balanced composition from a dietetic-nutritional point of view.

## Claims

1. Process for the production of breadsticks (1) having a wide substantially U-shaped cross section, comprising the steps of:
preparing a breadstick dough,
forming a plurality of elongated and substantially cylinder-shaped semi-finished products (5) from said dough,
arranging said semi-finished products in channel-shaped recesses (4) having an arched section and being of a predetermined depth (h), formed in a baking tin (3);
**characterized by** the steps of:
leaving the aforementioned semi-finished products (5) to rest and rise;
compressing the exposed surface of the semi-finished products (5) through pressers (6) having an elongated convex compression surface (7) substantially matching that of the aforementioned recesses (4) and heated to a temperature higher than 130°C, for a predetermined amount of time, in order to form a concavity (2) extending longitudinally on said exposed surface of the semi-finished products (5); and
baking said semi-finished products (5), thus obtaining breadsticks with a wide substantially U-shaped cross-section.

2. Process according to claim 1, wherein said pressers (6) are substantially the same length as or slightly shorter than the length of the semi-finished products (5).

3. Process according to claim 1 or 2, wherein said pressers are heated to a temperature of 130-200°C.

4. Process according to claim 3, wherein said pressers are heated to a temperature of 140-160°C.

5. Process according to claim 3 or 4, wherein said compression step lasts for 30-180 seconds.

6. Process according to claim 5, wherein said compression step lasts for 60-120 seconds.

## Patentansprüche

1. Verfahren zur Herstellung von Brotstäbchen (1) mit einem weiten, im Wesentlichen U-förmigen Querschnitt, folgende Schritte umfassend:
Zubereiten eines Teiges für Brotstäbchen,
Formen mehrerer langgestreckter und im Wesentlichen zylinderförmiger Halbfertigprodukte (5) aus dem Teig,
Anordnen der Halbfertigprodukte in rinnenförmigen Ausnehmungen (4) mit einem gekrümmten Profil und von vorbestimmter Tiefe (h), die in einem Backblech (3) gebildet sind;
**gekennzeichnet durch** die Schritte:
Ruhenlassen der vorerwähnten Halbfertigprodukte (5), damit sie ruhen und aufgehen;
Zusammendrücken der freiliegenden Oberfläche der Halbfertigprodukte (5) für eine vorbestimmte Zeitdauer **durch** Presselemente (6) mit einer langgestreckten konvexen Druckfläche (7), die im Wesentlichen mit derjenigen der vorerwähnten Ausnehmungen (4) zusammenpasst und auf eine Temperatur von über 130°C erwärmt ist, (9), um eine Höhlung (2) zu bilden, die in Längsrichtung an der freiliegenden Oberfläche der Halbfertigprodukte (5) verläuft; und
Backen der Halbfertigprodukte (5), wodurch Brotstäbchen mit einem weiten, im Wesentlichen U-förmigen Querschnitt erhalten werden.

2. Verfahren nach Anspruch 1, wobei die Presselemente (6) im Wesentlichen genauso lang wie die Halbfertigprodukte (5) oder geringfügig kürzer sind.

3. Verfahren nach Anspruch 1 oder 2, wobei die Presselemente auf eine Temperatur von 130 bis 200°C erwärmt werden.

4. Verfahren nach Anspruch 3, wobei die Presselemente auf eine Temperatur von 140 bis 160°C erwärmt werden.

5. Verfahren nach Anspruch 3 oder 4, wobei der Schritt des Zusammendrückens 30 bis 180 Sekunden lang andauert.

6. Verfahren nach Anspruch 5, wobei der Schritt des Zusammendrückens 60 bis 120 Sekunden lang andauert.

## Revendications

1. Processus pour la production de baguettes de pain (1) ayant une large section sensiblement en forme de U, comprenant les étapes consistant à :
préparer une pâte pour baguettes de pain,
former une pluralité de produits semi-finis (5) allongés et sensiblement de forme cylindrique à partir de ladite pâte,
agencer lesdits produits semi-finis dans des évidements (4) en forme de canaux ayant une section en forme d'arc et d'une longueur (h) prédéterminée, formés dans un moule (3) ;
**caractérisé par** les étapes consistant à :
laisser les produits semi-finis (5) susmentionnés reposer et lever ;
comprimer la surface exposée des produits semi-finis (5) par l'intermédiaire de presseurs (6) comportant une surface de compression (7) allongée convexe correspondant sensiblement à celle des évidements (4) susmentionnés et chauffés à une température supérieure à 130 °C, pendant un temps prédéterminé, afin de former une concavité (2) s'étendant longitudinalement sur ladite surface exposée des produits semi-finis (5) ; et
cuire lesdits produits semi-finis (5), obtenant ainsi des baguettes de pain présentant une large section sensiblement en forme de U.

2. Processus selon la revendication 1, dans lequel lesdits presseurs (6) ont sensiblement la même longueur ou sont légèrement plus courts que les produits semi-finis (5).

3. Processus selon la revendication 1 ou 2, dans lequel lesdits presseurs sont chauffés à une température de 130 à 200 °C.

4. Processus selon la revendication 3, dans lequel lesdits presseurs sont chauffés à une température de 140 à 160 °C.

5. Processus selon la revendication 3 ou 4, dans lequel ladite étape de compression dure 30 à 180 secondes.

6. Processus selon la revendication 5, dans lequel ladite étape de compression dure 60 à 120 secondes.
